Europäisches Patentamt

European Patent Office

Office européen des brevets

(11) Publication number: **0 039 196**
**B1**

## (12) EUROPEAN PATENT SPECIFICATION

(45) Date of publication of patent specification: **18.07.84**

(51) Int. Cl.³: **B 21 D 51/46**

(21) Application number: **81301755.5**

(22) Date of filing: **21.04.81**

(54) Molding tool for forming a liner on the inside of a top panel of a container closure shell.

(30) Priority: **28.04.80 JP 55387/80**

(43) Date of publication of application:
**04.11.81 Bulletin 81/44**

(45) Publication of the grant of the patent:
**18.07.84 Bulletin 84/29**

(84) Designated Contracting States:
**DE FR GB IT NL SE**

(56) References cited:
**AT - B - 177 081**
**FR - A - 2 307 593**
**GB - A - 1 080 654**
**GB - A - 1 369 415**

(73) Proprietor: **JAPAN CROWN CORK CO. LTD.**
**Saiwa Building 3-1 Uchisaiwai-cho 1-chome**
**Chiyoda-ku Tokyo (JP)**

(72) Inventor: **Kawashima, Masayoshi**
**1707-3 Minori-machi Hatori**
**Higashi Ibaraki-Gun Ibaraki (JP)**
Inventor: **Yuasa, Akio**
**1-6-22 Naka Sakurazuka**
**Toyonaka-shi Osaka-fu (JP)**

(74) Representative: **Hewlett, Arthur James et al,**
**STEVENS, HEWLETT & PERKINS 5 Quality Court**
**Chancery Lane**
**London WC2A 1HZ (GB)**

Courier Press, Leamington Spa, England.

## Description

This invention relates to a molding tool for forming a liner on the inner surface of a circular top panel of a container closure shell. More specifically, it pertains to a molding tool comprising a central molding member and a position-setting sleeve disposed externally of the central molding member and adapted for forming a liner on the inner surface of a circular top panel of a container closure shell of the type comprising a circular top panel, a cylindrical skirt extending downwardly from the peripheral edge of the top panel, and a circumferentially extending annular groove formed in the upper portion of the skirt.

Closures of the above type and having a molded gasket liner have gained widespread acceptance for containers, such as bottles, having externally threaded necks. The shells of such container closures frequently include an annular groove at a position towards the upper end of the skirt of the shell.

Generally, the above container closures are produced by fabricating a metal shell of the desired shape, supplying a deposit of flowable liner material to the inner surface of the top panel of the shell, and molding the liner material in situ. The liner material is molded by placing the inverted shell, containing a deposit of the liner material, on a support and then introducing a molding tool into the shell and pressing the liner material to the desired shape.

One widely used form of molding tool comprises a centre punch, an annular bushing mounted co-axially with said punch and a position-setting external sleeve arranged around said bushing, as disclosed, for example, in British Patent No. 1,552,713. The known molding tool, however, gives rise to various problems. For example, the action of the position-setting external sleeve upon the shell is too slow. Moreover, the position-setting external sleeve is likely to contact or abut the skirt at the annular groove to cause undesirable deformation to the annular groove or prevent correct molding of the liner material to the desired shape.

According to the present invention these difficulties are overcome by employing a molding tool comprising a central molding member and an external sleeve, which is axially slidable in relation to the central molding member, the central molding member and the external sleeve member being arranged so that the end of the central molding member leads the end of the sleeve during unobstructed movement into the shell the sleeve being arranged to over-run the central molding member when the latter encounters resistance, the molding tool being characterised in that, the sleeve has a lower end portion having an external diameter which is no greater than the skirt diameter at the annular groove and an upper end portion having an external diameter greater than the diameter of the skirt at the groove and less than the skirt diameter above the groove, the length of the lower end portion being greater than the vertical distance between the top panel and the groove and dimensioned so that the upper end portion of the sleeve may enter the skirt to exert a centering action before the central molding member contacts the top panel.

In the accompanying drawings:

Figure 1 is a sectional view showing a known container closure shell provided with a molded liner;

Figure 2 is a part sectional view illustrating the action of an annular groove in the skirt of the container closure shell of Figure 1;

Figure 3 is a part sectional view of a known molding tool for molding a liner in the closure of Figure 1; and

Figures 4 to 6 are part sectional views showing the construction and operation of one embodiment of the molding tool of this invention, the tool being shown in its normal start position in Figure 4.

For a better understanding of the present invention, the configuration of a container closure and a known molding tool for molding a liner are discussed at some length before going into a detailed description of one embodiment of the molding tool of this invention.

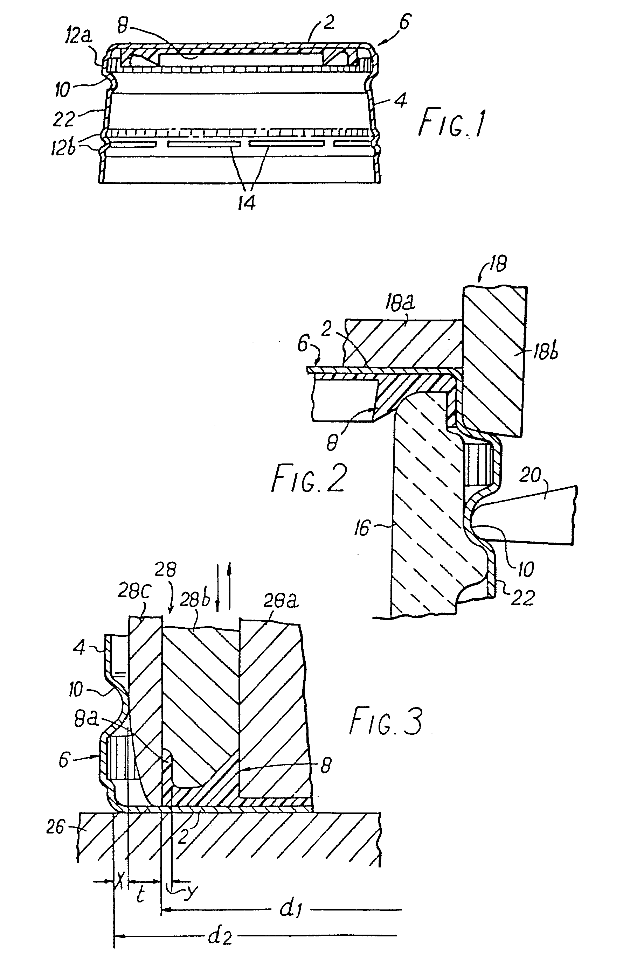

A closure for a container, such as a bottle, having a threaded neck comprises a metallic shell 6 composed of a circular top panel 2 and a cylindrical skirt 4 extending downwardly from the peripheral edge of the top panel 2, and a molded liner 8 disposed on the inside of the top panel 2, as shown in Figure 1. In such a container closure, it is important that a circumferentially extending annular groove 10 should be formed at a specified site in the upper portion of the skirt 4 of the shell 6. In many cases, the skirt 4 has knurls (an upper knurl 12a and a lower knurl 12b in the container closure illustrated in Figure 1) for preventing finger slip at the time of opening the container closure mounted on the neck portion of the container, and also a plurality of slits 14 formed circumferentially in spaced-apart relation to render the container closure pilferproof, may be provided.

The operation of the annular groove 10 is briefly described. When the closure is to be sealed about the neck portion of a container, it is the general practice to fit the container closure over the neck portion 16 of the container, deform the shoulder (the boundary portion between the top panel 2 and the skirt 4) of the shell by a throat member 18b of a pressing tool 18 while pressing the top panel 2 of the shell 6 against the end portion of the neck 16 by a pressure block 18a of the pressing tool 18 via the liner 8, and then threading the part 22 of the skirt 4 by deforming it between the thread formations on the neck 16 by the action of thread roller 20. The annular groove 10 is so positioned that it guides the thread roller 20 into engagement with the neck thread formations.

Generally, a container closure having the configuration shown in Figure 1, is produced by the following procedure. First, the cup-like shell 6 is fabricated from a suitable metal blank by press-forming, drawing, etc. Then, by using a suitable device a circumferentially extending annular groove 10 is formed, at the same time as knurls 12a, 12b, slits 14 and other optional features. Then, a suitable liner material is fed to the inside of the top panel portion of the thus formed shell 6, and then the liner material is molded to form a liner of a predetermined shape therein.

In molding the liner material in the above manufacturing procedure, the inverted shell is placed on a support 26 and a molding tool is moved downwardly into the shell 6 to mold the liner material into a liner 8 of the desired shape. In view of the sealing characteristics of an opening portion of a container sealed by a container closure, it is important that the molded liner 8 should have an appropriate shape such as the one disclosed in British Patent No. 1,552,713. In order to form such a liner 8, a known molding tool 28, as shown in Figure 3, comprises a centre punch 28a, a separately movable annular bushing 28b and a position-setting external sleeve 28c. The external peripheral surface of the sleeve 28c contacts the inside of the minimum diameter portion of the skirt at the annular groove 10 thereby centering the shell 6 with the molding tool 28. The lower end surface of the sleeve 28c contacts the inside of the top panel of the shell 6, thereby defining the outside diameter of the liner 8 to be formed, and preventing the liner material from flowing outwardly and rising along the skirt 4.

In the known molding tool 28 illustrated in Figure 3, the external sleeve 28c begins to exert a position-setting or centering action on the shell 6 when the molding tool 28 has been inserted into the shell 6 to such an extent that the lower end of the sleeve 28c contacts the skirt at the annular groove 10. Frequently the centering action is too slow. For example, if the molding tool 28 is of the type in which the centre punch 28a leads the sleeve 28c, the centre punch 28a has already contacted the liner material.

Furthermore, the centering action of the sleeve 28c is performed by contact of the lower end portion of the sleeve 28c with the inside surface of the annular groove 10. However, this action may cause undesirable deformation to the annular groove 10.

The known molding tool 28 also has the problem that in the molded liner 8, it is desirable that the outside diameter $d_1$ of the liner 8 should be as close as possible to the inside diameter $d_2$ of the top panel 2. The outside diameter $d_1$ of the liner 8 is necessarily smaller than the inside diameter $d_2$ of the top

panel of the shell 6 by the depth x of the annular groove 10 formed in the skirt 4 (i.e. the amount of radially inward projection) and the thickness of the sleeve 28c (namely,

$$\frac{d_2-d_1}{2}=x+t).$$

The depth of the annular groove 10 is generally about 0.5 mm, and the thickness of the sleeve 28c is generally at least 0.8 mm. Accordingly, $d_2-d_1/2$ is generally at least 1.3 mm. In this case, the thickness of an external wall surface portion 8a of the liner 8 is necessarily small. Experience shows that when the thickness $y$ of the outside wall surface portion 8a of the liner 8 is small, the portion 8a of the liner will be sheared off relatively easily when an impact force is exerted by throat member 18b on the shoulder of a container closure after the closure has been sealed about the neck portion 16 of a container, thus giving rise to the serious problem that the seal between portion 8a and the cylindrical surface on the neck 16 is rendered ineffective to seal the container.

To reduce this risk, the $d_2-d_1$ value should be minimised. It may be possible to achieve this by decreasing the depth x of the annular groove 10 and/or by decreasing the thickness t of the sleeve 28c. If the depth x of the annular groove 10 is made too small, it is impossible to guide the thread roller 20 (Figure 2) accurately. Consequently, it is extremely difficult to thread part 22 of the skirt as required, and after thread rolling the appearance of the closure is poor. On the other hand, if the thickness $t$ of the sleeve 28c is decreased, its strength will be reduced and the sleeve 28c will be broken within a relatively short period.

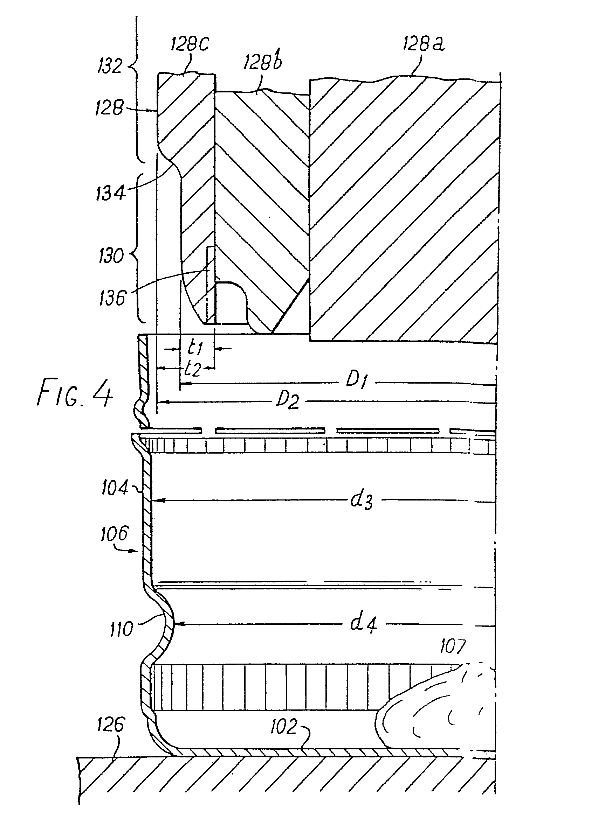

Figures 4 to 6 show one specific embodiment of the molding tool of this invention which skillfully gives a solution to the above problems of the known molding tool 28.

Referring to Figure 4, an inverted container closure shell 106 is conveyed by a suitable conveying mechanism (not shown) to a support 126. The shell 106 may be of the same form as the shell 6 illustrated in Figure 1. It is important that the inside of the top panel 2 should contain a liner material 107 of a suitable plastic material such as a polyolefin (e.g. polyethylene) or a vinyl chloride resin supplied thereto.

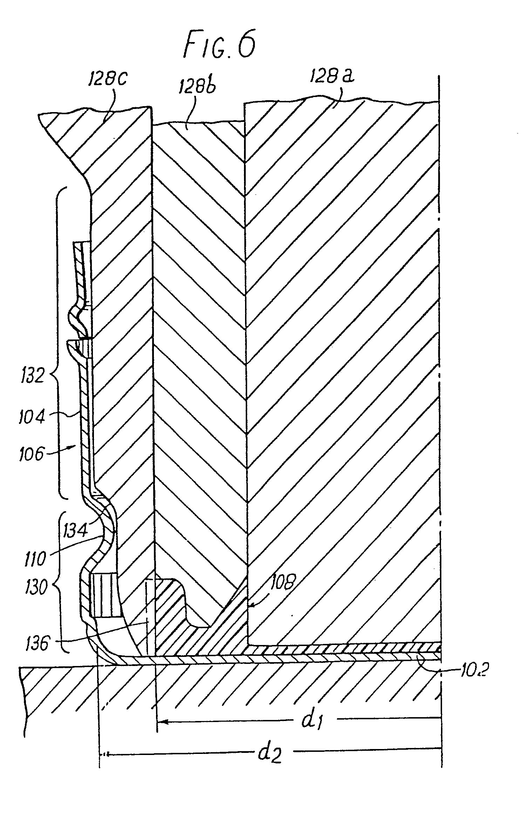

The molding tool 128, constructed in accordance with this invention is disposed above the support 126, and is provided with means for raising and lowering in relation to support 126 so that it can be inserted into the shell 106 to thereby mold the liner material 107 into a liner 108 (Figure 6) of the desired shape.

The molding tool 128, constructed in accordance with this invention, comprises a centre punch 128a and an annular bushing 128b disposed externally of the centre punch 128a, and a position-setting sleeve 128c disposed externally of the annular bushing 128b. In the illustrated embodiment, the centre punch 128a and the annular bushing 128b of the central molding member are separate and independent, but if desired, they may be formed as an integral one-piece unit. The three elements constituting the molding tool 128, that is, the centre punch 128a, annular bushing 128b and position-setting external sleeve 128c, are connected to each other and to a drive mechanism in a conventional manner. Accordingly, a description is omitted, and for details, reference may be made, for example, to U.S. Patent No. 3,278,985.

The profiles of the undersurfaces of the centre punch 128a and annular bushing 128b of the molding tool 128 correspond to the desired shape of the liner 108 (Figure 6) formed by the molding operation.

The sleeve 128c, on the other hand, is in the form described below in accordance with this invention.

As shown clearly in Figures 4 to 6, a lower end portion 130 of the sleeve 128c has an external diameter $D_1$ no greater and preferably slightly less than the diameter $d_4$ of the inside of the skirt at the annular groove 110 of the closure shell 106. As seen in Figure 6 portion 130 extends from its lower end at least up to a level facing the bottom of annular groove 110 when the sleeve 128c had been fully inserted into the shell 106. The external surface of the lower end of the portion 130 of sleeve 128c is preferably tapered as shown in Figures 4 to 6.

On the other hand, a second portion 132 of the sleeve 128c joins the portion 130 through a tapered portion 134 having a progressively increasing outside diameter from the diameter $D_1$ of the portion 130 to the diameter $D_2$ of the portion 132. The outside diameter $D_2$ of the portion 132 corresponds to the inside diameter $d_3$ of that portion of the skirt 104 above the annular groove 110.

Preferably, the diameter $D_1$ is set with respect to the internal diameter $d_4$ of the skirt 104 at the annular groove 110, at

$$0.05 \text{ mm} = < d_4 - D_1 = < 0.40 \text{ mm},$$

more preferably

$$0.10 \text{ mm} = < d_4 - D_1 = < 0.20 \text{ mm}.$$

It is also preferred that the diameter $D_2$ of the portion 132 should be set with respect to the inside diameter $d_3$ of the skirt 104 at

$$0.05 \text{ mm} = < d_3 - D_2 = < 0.040 \text{ mm},$$

particularly

$$0.10 \text{ mm} = < d_3 - D_2 = < 0.020 \text{ mm}.$$

The internal diameter of the sleeve 128c should be increased as much as possible if it is desired to cause the diameter $d_1$ of the liner 108 (Figure 6) to approach the value of the inside diameter $d_2$ of the top panel of the shell 106 as closely as possible. However, increase of the internal diameter of the sleeve 128c necessarily results in a decrease in the strength of the sleeve 128c. In view of this, it is desirable to set the internal diameter of the sleeve 128c such that the thickness $t_1$ of the sleeve 128c at the portion 130 is at least 0.45 mm, and the thickness $t_2$ at the portion 132 is at least 0.50 mm.

If desired, an annular recess 136 may be formed on the inside surface of the sleeve 128c as shown by chain lines in Figures 4 to 6 in order to maximise the thickness $t_2$ of the sleeve 128c at the portion 132 and its thickness $t_1$ for most of the portion 130, and to make the outside diameter $d_1$ of the liner 108 as close as possible to the inside diameter $d_2$ of the top panel of the shell 106 while retaining a satisfactory wall thickness of the sleeve 128c to provide strength.

The sleeve 128c may be made of a suitable material such as SKD tool steel or SKS tool steel.

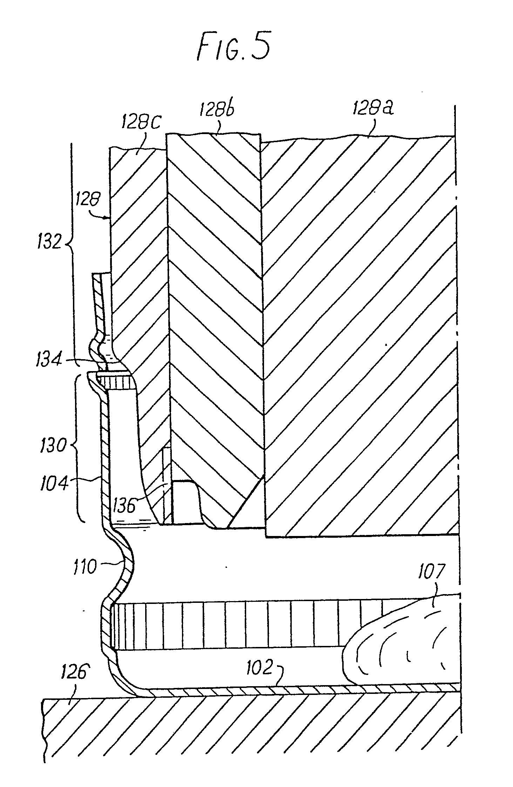

In operation molding tool 128 having the improved sleeve 128c molds liner material 107 (Figure 4) on the inside of the top panel 102 into a predetermined shape. It will be readily appreciated with reference to Figures 4 and 5 that when the molding tool 128 enters the closure shell, the portion 132 enters the skirt 104 before the centre punch 128a and the annular bushing 128b starts to act on the liner material 107 and before the full diameter portion of the lower portion 130 of sleeve 128c comes within the annular groove 110. If the central axial line of the molding tool 128 is not fully in alignment with the axis of the closure shell 106, the tapered portion 134 and main portion 132 the sleeve 128c successively makes contact with the upper end portion of the skirt 104 of the shell 106 during descent of the molding tool 128 from the position shown in Figure 4 to the position shown in Figure 5, thereby centering the closure shell 106 with respect to the molding tool 128. After this position-setting operation has been performed, the molding tool 128 travels to the position shown in Figure 6 to mold the liner material 107 (Figures 4 and 5) into the liner 108 of the desired shape.

Since the closure shell 106 is centered with respect to the molding tool 128 by the action of the portion 132 of the sleeve 128c before the portion 130 of the sleeve 128c enters the reduced diameter portion of the skirt at the annular groove 110, the lower end position of the sleeve 128c does not cause undesirable deformation in the skirt at the annular groove 110.

Furthermore, since it is only a limited portion at the lower end portion of the sleeve 128c that is decreased in thickness so as to make the outside diameter $d_1$ of the liner 108 as close as possible to the inside diameter $d_2$ of the top panel of the closure shell 106, the strength of the sleeve 128c is higher than in the case of decreasing the thicknesses of both the upper and lower parts of the sleeve as shown in Figure 3. Hence, the sleeve 128c does not undergo early damage upon repetition of the molding operation.

The closure shell 106 shown in Figures 4 to 6 is of a special form having pilferproof characteristics. It should be understood that the molding tool 128 constructed in accordance with this invention for molding a liner material as required into a liner on the inside of the top panel of a shell can be applied not only to the closure shell 106 of such a form but also to closure shells of any other forms having an annular groove in the skirt.

## Claims

1. A moulding tool for forming a liner (8) on the inside surface of a circular top panel (2) of a container closure shell (6), having a skirt (4), in which an annular groove (10) forms an inward projection at a location close to the top panel (2), the moulding tool comprising a central moulding member (28a) and an external sleeve (28c), which is axially slidable in relation to the central moulding member (28a), the members (28a) and (28c) being arranged so that the end of member (28a) leads the end of member (28c) during unobstructed movement into the shell member (28c) being arranged to over-run member (28a) when the latter encounters resistance characterised in that said sleeve (28c) has a lower end portion (130) having an external diameter ($D_1$) which is no greater than the skirt diameter ($d_4$) at the annular groove (10) and an upper end portion (132) having an external diameter ($D_2$) greater than the diameter ($d_4$) of the skirt at the groove (10) and less than the skirt diameter ($d_3$) above the groove (10), the length of the lower end portion (130) being greater than the vertical distance between the top panel (2) and the groove (10), and dimensioned so that the upper end portion (132) may enter the skirt to exert a centering action before the central moulding member (28a) contacts the top panel (2).

2. A moulding tool according to claim 1 further characterised in that the external surface of the sleeve tapers at 134 between the lower end of the upper portion (132) and the upper end of the lower portion (130).

3. A moulding tool according to claim 1 or 2 further characterised in that the central moulding member comprises a centre punch (128a) and an annular bushing (128b) slidably mounted about said centre punch (128a) and within sleeve (128c), the bottom end of bushing (128b) having a liner-forming profile.

## Patentansprüche

1. Werkzeug zum Formen einer Einlage (8) an der Innenfläche einer kreisförmigen oberen Wand (2) einer Behälterverschlußkapsel (6) mit einem Rand (4), in dem eine ringförmige Nut (10) einen Innenvorsprung an einer Stelle nahe der oberen Wand (2) bildet, wobei das Werkzeug einen Mittelformteil (28a) und eine Außenhülse (28c) enthält, die axial gleitbar relativ zu dem Mittelformteil (28a) ist, wobei die Teile (28a, 28c) so angeordnet sind, daß das Ende des einen Teils (28a) das Ende des anderen Teils (28c) während einer unbehinderten Bewegung in den Hülsenteil (28c) führt, der so angeordnet ist, daß er den einen Teil (28a) überholt, wenn der letztere auf Widerstand trifft, dadurch gekennzeichnet, daß die Hülse (28c) einen unteren Endteil (130) mit einem Außendurchmesser ($D_1$), der nicht größer als der Randdurchmesser ($d_4$) an der ringförmigen Nut (10) ist, und einen oberen Endteil (132) mit einem Außendurchmesser ($D_2$) größer als der Durchmesser ($d_4$) des Rands an der Nut (10) und kleiner als der Randdurchmesser ($d_3$) über der Nut (10) enthält, wobei die Länge des unteren Endteils (130) größer als der vertikale Abstand zwischen der oberen Wand (2) und der Nut (10) ist und so bemessen ist, daß der obere Endteil (132) in den Rand eintreten kann, um eine Zentrierwirkung auszuüben, bevor der Mittelformteil (28a) die obere Wand (2) berührt.

2. Werkzeug zum Formen nach Anspruch 1, dadurch gekennzeichnet, daß die äußere Fläche der Hülse bei 134 zwischen dem unteren Ende des oberen Teils (132) und dem oberen Ende des unteren Teils (130) abgeschrägt ist.

3. Werkzeug zum Formen nach Anspruch 1 oder 2, dadurch gekennzeichnet, daß der Mittelformteil einen Mittelstempel (128a) und eine gleitbar um den Mittelstempel (128a) und innerhalb der Hülse (128c) angeordnete ringförmige Buchse (128b) aufweist, wobei das untere Ende der Buchse (128b) ein die Einlage bildendes Profil aufweist.

## Revendications

1. Dispositif pour mouler un disque d'étanchéité (8) servant à garnir le fond d'une capsule de fermeture (2) d'un récipient (6) ayant une jupe (4) comportant une rainure annulaire (10) faisant saillie intérieurement à l'emplacement de la fermeture de la capsule (2). Le dispositif comportant un élément de moulage central (28a) et un manchon externe (28c) lequel est axialement déplaçable par glissement par rapport à l'élément de moulage central (28a), les éléments (28a) et (28c) étant disposés de façon à ce que l'extrémité de l'élément (28a) devance l'extrémité de l'élément (28c) pendant un mouvement sans rencontre d'obstacle à l'intérieur du récipient, l'élément extérieur (28c) étant disposé de façon à dépasser l'élément (28a) quand ce dernier rencontre une résistance, caractérisé en ce que ledit manchon (28c) a une partie extrême basse (130) ayant un diamètre externe (D1) qui est inférieur au diamètre de la jupe (d4) à la rainure annulaire (10) et une partie extrême haute (132) ayant un diamètre externe (D2) plus grand que le diamètre de la jupe (d4) à la rainure (10) et plus faible que le diamètre de la jupe (d3) au-dessus de la rainure (10), la longueur de la partie extrême basse (130) étant plus grande que la distance verticale entre le couvercle (2) et la rainure (10), et dimentionné de façon à ce que la partie extrême haute (132) puisse pénétrer dans la jupe (4) afin d'exercer une action de centrage avant que l'élément de moulage central (28a) soit en contact avec le couvercle (2).

2. Dispositif selon la revendication 1, caractérisé en ce que la surface externe du manchon s'effile au niveau (134) entre l'extrémité basse de la partie haute (132) et l'extrémité haute de la partie basse (130).

3. Dispositif selon l'une des revendications, caractérisé en ce que l'élément de moulage central comporte un poinçon central (128a) et une bague annulaire (128b) montée glissante entre le poinçon central (128a) et le manchon (128c), l'extrémité de la bague annulaire (128b) ayant le profil du disque d'étanchéité.

FIG.1

FIG.2

FIG.3

FIG. 4

# FIG.5

## FIG. 6